# EUROPÄISCHE PATENTSCHRIFT

(11) **EP 3 186 057 B1**
(45) Veröffentlichungstag und Bekanntmachung des Hinweises auf die Patenterteilung: **08.11.2023**
(21) Anmeldenummer: 15754243.2
(22) Anmeldetag: 27.08.2015
(51) Int. Cl.: B29C 45/14

(54) **VERFAHREN UND VORRICHTUNG ZUR HERSTELLUNG VON FORMTEILEN**
METHOD AND APPARATUS FOR THE MANUFACTURE OF PARTS
PROCÉDÉ ET DISPOSITIF DE FABRICATION DE PIÈCES

(30) Priorität: 28.08.2014 DE 102014217173
(43) Veröffentlichungstag der Anmeldung: 05.07.2017
(73) Patentinhaber: FRIMO Group GmbH, 49504 Lotte (DE)
(72) Erfinder: RÜBSAM, Thomas, 49504 Lotte (DE); KAWALA, Kamilo, 49504 Lotte (DE)
(74) Vertreter: Hoffmann Eitle
(86) Internationale Anmeldenummer: PCT/EP2015/069634
(87) Internationale Veröffentlichungsnummer: WO 2016/030459

(56) Entgegenhaltungen:
- EP-A2- 0 272 635
- EP-A2- 0 433 857
- DE-A1- 19 914 092
- JP-A- H08 156 023
- JP-A- 2009 113 548
- JP-A- 2010 274 636

## Beschreibung

### Technisches Gebiet

Die vorliegende Erfindung betrifft ein Verfahren zur Herstellung von Formteilen sowie ein System. Derartige Formteile kommen bevorzugt im Automobilbau, beispielsweise als Innenverkleidungsteile, zur Anwendung.

### Stand der Technik

Im Stand der Technik sind Vorrichtungen zur Herstellung von Formteilen bekannt. Die bekannten Vorrichtungen umfassen ein Werkzeug mit einer Unterform und einer Oberform, wobei an der Oberform eine Schneidkante vorgesehen ist.

Zur Herstellung eines Formteils wird ein Materialzuschnitt in eine geöffnete Kavität des Werkzeugs eingelegt. Durch Schließen des Werkzeugs wird der Materialzuschnitt verformt und ein Randabschnitt des Materialzuschnitts durch die Schneidkante abgetrennt.

Aufgrund der Verformung des Materialzuschnitts entlang eines vergleichsweise langen Schnittbereichs, der sich um den gesamten Materialzuschnitt erstreckt, zieht sich der Materialzuschnitt jedoch in Richtung Werkzeugmitte zurück. Demnach wird im Stand der Technik darauf abgezielt, die Schneidkante so klein wie möglich auszubilden, um ein weites Zurückziehen des Materialzuschnitts zu verhindern. Ferner wird lediglich ein kleiner Überfahrschnitt gewählt, damit die Außenkante geschnitten wird, wenn die Verformung bereits weitestgehend erfolgt ist. In diesem Zustand wird der Materialzuschnitt derart gehalten, dass ein Verrutschen im Bereich der Schneidkante weitestgehend vermieden wird.

Im Dokument DE 199 14 092 A1 wird ein Verfahren und eine Vorrichtung zur Herstellung eines Verkleidungs- und Zierteils beschrieben. Insbesondere ist es bekannt, Verkleidungs- und Zierteile zu verwenden, die im Wesentlichen aus einer Spritzgießmasse und einem damit in der Spritzform bleibend verbundenen Dekorteil bestehen. Das Dekorteil kann sowohl ein Echtholzfurnier beinhalten als auch ein Aluminium- oder anderes Metallteil.

Ferner ist das Dokument EP 0 272 635 A2 bekannt, in dem ein Herstellungsverfahren mit faserverstärkten Kunststoffen beschrieben wird.

Darüber hinaus sind die Dokumente JP 2010 274636 A, JP 2009 113548 A sowie JP H08 156023 A zu nennen.

### Darstellung der Erfindung

Es ist daher Aufgabe der Erfindung ein Verfahren und eine Vorrichtung zur Herstellung von Formteilen bereitzustellen, die eine Verringerung von Maßungenauigkeiten bei hoher Produktivität sowie eine flexible Ausgestaltung des Schnittbereichs des auszubildenden Formteils ermöglichen.

Erfindungsgemäß wird diese Aufgabe durch ein Verfahren und eine Vorrichtung zur Herstellung von Formteilen, insbesondere Dekorteilen und/oder Verkleidungsteilen für einen Fahrzeuginnenraum, mit den Merkmalen der unabhängigen Patentansprüche gelöst. Weitere bevorzugte Ausgestaltungen der Erfindung sind in den abhängigen Ansprüchen angegeben.

Das erfindungsgemäße Verfahren zur Herstellung von Formteilen umfasst die Merkmale gemäß Anspruch 1.

Dabei umfasst der Materialzuschnitt ein Faserhalbzeug. Wenn der Materialzuschnitt aus einem Faserhalbzeug gebildet ist, ziehen sich die Fasern des Materialzuschnitts aufgrund der Verformung des Randbereiches bei der Herstellung des Formteils in Richtung Werkzeugmitte zurück. Ein derartiger Rückzug der Fasern tritt insbesondere auf, wenn die Fasern stark voreilend zum Formhub beschnitten werden. Das heißt, in diesem Fall können Kanten mit einer größeren Stärke bzw. Dicke an den Materialzuschnitt angespritzt werden, da aufgrund des stärkeren Faserrückzugs ein größerer Spritzgussbereich zwischen Beschnittkante und Nestende entsteht. Wie bereits oben erwähnt, hängt die Stärke der fertiggespritzten Kante, bzw. die Größe des Spritzgussbereiches, davon ab, wie voreilend die Fasern geschnitten worden sind, und um welchen Betrag sich die Fasern noch weiter verformt haben.

Vorzugsweise ist der Materialzuschnitt beziehungsweise das Faserhalbzeug vorkalibriert, d.h. das Faserhalbzeug wurde bereits vorher auf ein genaues Maß gebracht. Bei der Vorkalibrierung wird der Materialzuschnitt beziehungsweise das Faserhalbzeug vorzugsweise zusätzlich einem Temperatureintrag ausgesetzt, welcher der Aktivierung des Faserhalbzeugs für den anschließenden Verarbeitungsprozess dient.

Gemäß einer bevorzugten Ausführungsform der vorliegenden Erfindung ist das Faserhalbzeug aus einem Faserverbundwerkstoff gebildet. Besonders bevorzugt ist das Faserhalbzeug aus einem Faser-Kunststoff-Verbund, d.h. thermoplastisch gebundene Fasern, gebildet. Insbesondere bevorzugt wird ein Naturfaser-/Polypropylen-Gemisch (NFPP). Jedoch kommen sämtliche Fasermaterialien mit einer Matrix in Betracht. Weitere Materialien, die im erfindungsgemäßen Verfahren als Materialzuschnitt eingesetzt werden können, umfassen beispielsweise CFK, GFK, Polyamid-Matrix-Kompositwerkstoffe oder Organobleche. Die Verwendung von Organoblechen hat den Vorteil, dass diese in einem erwärmten Zustand in die entsprechende Form des Werkzeugs eingelegt werden, wobei sie lediglich reaktiviert werden müssen. Andererseits ist bei der Verarbeitung beispielsweise von NFPP-Materialzuschnitten im Allgemeinen noch eine Vorkalibrierung erforderlich, d.h. sie werden auf ein genaues Maß gebracht sowie einem Temperatureintrag ausgesetzt. Vorzugsweise umfasst das zur Ausbildung der Kante verwendete Spritzgussmaterial das Matrixmaterial des zu verarbeitenden Materialzuschnitts. Aufgrund der geringen Dichte und hohen Festigkeit sind Faserverbundstoffe besonders für Dekorteile und/oder Verkleidungsteile für einen Fahrzeuginnenraum geeignet.

Es wird ein Materialzuschnitt in die Unterform eingelegt. Der Materialzuschnitt ist hierbei vorzugsweise aufgeheizt und weist bereits die erforderliche Wandstärke des auszubildenden Formteils auf, ggf. zusätzlich einem Aufmaß von ca. 0,2-0,3mm, um im Werkzeug weiter Druck zu erzeugen. Anschließend wird die Kavität des Werkzeugs geschlossen und dadurch der Materialzuschnitt bereits zum Teil verformt.

Bevor die Kavität vollständig geschlossen ist, und damit auch die Verformung des Materialzuschnitts abgeschlossen ist, wird ein Bereich des Materialzuschnitts (Schnittbereich) abgetrennt. Eine Trenneinrichtung zum Abtrennen des Materialzuschnitts ist vorzugsweise an der Oberform angeordnet. Die Schnittstärke zum Erzeugen des Schnittbereichs ist hierbei bspw. einstellbar oder voreingestellt.

Da sich der Materialzuschnitt aufgrund der Verformung des zu schneidenden Bereiches in Richtung Werkzeugmitte zurückzieht, entsteht ein Spalt zwischen einer Überfahrkante am Werkzeug und einem Nestende des Werkzeugs. Als Überfahrkante wird hierbei eine Kante des Werkzeugs verstanden, vorzugsweise eine an der Oberform des Werkzeugs bzw. an der Trenneinrichtung angeordnete Kante, die beim Schließen der Kavität eine Beschnittkante der anderen Form (hier die Unterform) überfährt.

Beim Abtrennen eines Bereichs des Materialzuschnitts kann dieser Schneidvorgang sowohl im Randbereich oder auch in einem inneren Bereich erfolgen.

In einer bevorzugten Ausführungsform der Erfindung wird der Schließvorgang ohne Zwischenstopp durchgeführt, auch wenn ein solcher Zwischenstopp ebenfalls möglich ist.

Ferner wird der Begriff "Nest" als Synonym für "Kavität" verwendet, wobei es sich bei dem "Nestende" um einen Bereich des Nests in der näheren Umgebung der Beschnittkante handelt.

Anschließend wird der Bereich zwischen Beschnittkante und Nestende noch im selben Werkzeug umspritzt, d.h. der in diesem Bereich liegende Schnittbereich, beispielsweise ein Randbereich, des Materialzuschnitts wird in einem weiteren Bearbeitungsschritt mit einem Spritzgussmaterial angespritzt.

Als Spritzgussmaterial kommen sämtliche thermoplastische und duroplastische Materialien in Betracht, die im Spritzprozess verarbeitet werden können. In einer besonders bevorzugten Ausführungsform wird PP als Spritzgussmaterial verwendet. Möglich ist auch der Einsatz von PU. Es können auch Begleitmaterialien, wie beispielsweise Glasfaser, Talkum, Gase zum Aufschäumen etc. mitverarbeitet werden. Durch den integrierten Spritzgussschritt wird die Endkante des Materialzuschnitts "sauber" gespritzt. Damit erhält man die gewünschte Endkante des Bauteils. Außerdem kann die sich im Laufe der Zeit verschlechternde Beschnittqualität der Schneidkante ausgeglichen werden. Eventuelle Maßungenauigkeiten aufgrund eines unsauberen Beschnitts und Gratbildung können somit durch ein Umspritzen bzw. Anspritzen der Schnittkante des Materialzuschnitts ausgeglichen werden. Hierdurch entfällt ein sonst notwendiger Nachbearbeitungsschritt und der Arbeitsaufwand und die Fertigungskosten können reduziert werden. Somit ist durch die Verfahrenskombination aus Verformung von Materialzuschnitten, Beschnitt und Anspritzen (Spritzguss) in einem Werkzeug, d.h. in einem Schuss an ein und derselben Stelle, eine besonders effiziente und produktive Bearbeitung möglich.

Es entfällt eine Nachbearbeitung der Formteile nach Entnahme aus dem Werkzeug und es können engere Maßtoleranzen als bei einem herkömmlichen Werkzeug eingehalten werden. Ferner bietet das erfindungsgemäße Verfahren eine größere Flexibilität bei der Ausgestaltung des Randbereiches des auszubildenden Formteils, da das Verfahren die Möglichkeit bietet, eine Endkante anzuspritzen und dadurch auch unterschiedliche Geometrien darzustellen. Hierdurch wird beispielsweise die Wandstärke des Formteils im Randbereich veränderbar und es können spezielle Formen, wie beispielsweise Nuten, Lippen, Keil- oder Halbkreisformen etc. angespritzt werden. Somit können nicht nur saubere, d.h. beispielsweise gratfreie, Endkanten erzielt werden, sondern auch verschiedene Endkanten mit variabel veränderlichen Geometrien. Durch die Möglichkeit der variablen Ausgestaltung der Endkante des auszubildenden Formteils werden zudem noch Vorteile für die weitere Verarbeitung erzielt. So ermöglicht die variable Ausgestaltung der Endkante beispielsweise auch eine verbesserte Möglichkeit zum kleberlosen Umbug.

Gemäß einer bevorzugten Ausführungsform wird das Abtrennen des Randbereiches des Materialzuschnitts, in Abhängigkeit von einem zu erzielenden Materialrücksprung des Materialzuschnitts, vor dem vollständigen Schließen der Kavität des Werkzeugs ausgeführt. In dieser Hinsicht wurde bisher immer versucht, den Randbereich möglichst maßgenau abzutrennen, um eine eventuelle Nachbearbeitung des produzierten Formteils zu vermeiden. Da jedoch ein gewisser Materialrücksprung aufgrund der Verformung des Randbereichs unvermeidbar ist, wurden die Materialzuschnitte bisher nur geringfügig voreilend, d.h. erst kurz vor dem vollständigen Schließen der Werkzeugkavität, beschnitten. Hierdurch wurde versucht, den Materialrücksprung möglichst gering zu halten, um dadurch die erwünschte Maßgenauigkeit zu erzielen.

Die Erfinder der vorliegenden Anmeldung haben sich den bisher als Nachteil erachteten Materialrücksprung jedoch zum Vorteil gemacht. Deshalb erfolgt erfindungsgemäß, im Gegensatz zum Stand der Technik, das Abtrennen des Endbereiches des Materialzuschnitts stärker voreilend, d.h. mit größerem Abstand vor dem endgültigen Schließen der Werkzeugkavität als im Stand der Technik praktiziert.

Das heißt, erfindungsgemäß wird gezielt ein Materialrücksprung herbeigeführt, den es bisher immer zu verhindern galt. Durch den stärker voreilenden Beschnitt des Materialzuschnitts entsteht der Effekt der freien Kante zum Spritzen. Hierbei bestimmt die jeweils eingestellte Voreilung den Betrag des sich zurückziehenden Materialzuschnitts bzw. den Betrag des Materialrückzugs. Mit anderen Worten, hängt die Stärke der fertiggespritzten Kante, bzw. die Größe des Spritzgussbereiches, davon ab, wie voreilend der Materialzuschnitt geschnitten worden ist, und um welchen Betrag er sich noch weiter verformt hat. Ein stärker voreilender Beschnitt führt somit zu einem größeren Materialrücksprung und damit auch zu einem größeren umlaufenden Spalt zwischen der Beschnittkante am Werkzeug und dem Nestende des Werkzeugs. In diesem Fall können Kanten mit einer größeren Stärke bzw. Dicke an den Materialzuschnitt angespritzt werden. Umgekehrt führt ein weniger voreilender Beschnitt zu einem kleineren Materialrücksprung und damit auch zu einem kleineren umlaufenden Spalt zwischen der Beschnittkante am Werkzeug und dem Nestende des Werkzeugs. In diesem Fall können Kanten mit einer geringeren Stärke bzw. Dicke an den Materialzuschnitt angespritzt werden. Die erwünschte Voreilung kann hierbei fest im Werkzeug eingebaut werden oder auch variabel durch die Trenneinrichtung, wie beispielsweise ein Schnittblech, eingestellt werden.

Gemäß einer bevorzugten Ausführungsform werden das Abtrennen des zu schneidenden Bereichs des Materialzuschnitts und das vollständige Schließen der Kavität des Werkzeugs, und damit das endgültige Pressen des Materialzuschnitts, in einem Hub ausgeführt. Das heißt, der Trennvorgang und das finale Pressen werden in einem zusammenhängenden Hub ohne weitere Relativbewegungen ausgeführt. Das Werkzeug wird hierbei ohne anzuhalten, allerdings abgebremst, zugefahren. Dadurch vereinfacht sich die Steuerung des Herstellungsprozesses des Formteils.

Gemäß einer besonderen Ausführungsform der vorliegenden Erfindung wird die Schnittkante mit rückseitigen Rippen oder Direktanguss umspritzt. Das Vorsehen von Rippen ist beispielsweise häufig an Türverkleidungen notwendig, wobei hier Versteifungsrippen an konvexen Radien vorgesehen werden. Diese Versteifungsrippen erstrecken sich oftmals bis zur beschnittenen Endkante des Materialzuschnitts. In diesem Fall dienen die Versteifungsrippen als Zubringer von Spritzgussmaterial an die zu umspritzende Kante und werden mit der umspritzten Kante verbunden. Derartige Versteifungsrippen erstrecken sich nicht in Fluchtrichtung der Endkante, sondern vorzugsweise in einem Winkel von 90° zur Fluchtrichtung der Endkante. Falls Rippen an dem Formteil auszubilden sind, wird der Materialrücksprung vorzugsweise auf 2-3 mm eingestellt, so dass eine ausreichend große Spritzgusskavität mit Möglichkeit zur Abbildung entsteht.

Die durch das oben beschriebene Verfahren erhaltenen Formteile können anschließend noch kaschiert werden. Hierbei erfolgt das Kaschieren vorzugsweise kleberlos, wie in der EP 2 457 706 A des gleichen Anmelders beschrieben ist. Das Kaschieren kann vorzugsweise als kombiniertes Verfahren erfolgen, d.h. Verformen, Kaschieren und Anspritzen in einem Werkzeug. In diesem Fall würde vorzugsweise ein Dekormaterial dem Werkzeug zugeführt werden, welches dann mitkaschiert und verklebt (und verformt) würde.

Ein System mit einer Vorrichtung zum Herstellen von Formteilen, insbesondere Dekorteilen und/oder Verkleidungsteilen für einen Fahrzeuginnenraum, weist die Merkmale des unabhängigen Anspruchs 6 auf.

Durch die Vorrichtung ergeben sich die gleichen Vorteile wie durch das oben beschriebene, erfindungsgemäße Verfahren.

Insbesondere umfasst die Vorrichtung des Systems eine Spritzgusskavität bzw. einen Anspritzkanal, welche/r im Bereich der am Materialzuschnitt erzeugten Schnittkante vorgesehen ist, d.h. es werden Freiräume im Werkzeug für die Spritzzuführung gelassen. Die Spritzgusskavität ist derart vorgesehen, dass der zu schneidende Bereich des Materialzuschnitts, der zwischen Beschnittkante und Nestende liegt, umspritzt werden kann. Dadurch ist es möglich, eine "saubere" Endkante des Formteils zu erreichen, wodurch eine sich aufgrund des Verschleißes der Trenneinrichtung verschlechternde Beschnittqualität ausgeglichen wird. Ferner ist durch die in der Vorrichtung mögliche, kombinierte Bearbeitung von Materialzuschnitten, d.h. die Kombination von Verformen, Beschnitt und Anspritzen in einem Werkzeug, eine besonders effiziente und produktive Bearbeitung möglich.

Hierdurch entfällt eine Nachbearbeitung der Formteile nach Entnahme aus dem Werkzeug und es können engere Maßtoleranzen als bei einem herkömmlichen Werkzeug eingehalten werden. Auch müssen keine weiteren Werkzeuge oder Vorrichtungen vorgehalten werden, und die Anzahl der Prozessschritte wird verringert.

Weiterhin ermöglicht die erfindungsgemäße Vorrichtung eine größere Flexibilität bei der Ausgestaltung des Randbereiches des auszubildenden Formteils, da die Endkante an den Materialzuschnitt angespritzt wird und dadurch unterschiedliche Geometrien der Endkante dargestellt werden können. Die Form der Spritzgusskavität entscheidet somit über die spätere Form der angespritzten Kante. Die Spritzgusskavität hat hierbei den Aufbau eines Spritzgusswerkzeugs mit Nest, Auswerferplatte/Schieberplatte, Heisskanalsystem mit Nadelverschlussdüsen und Grundplatte. Maschinenabhängig kann die Angussbuchse entweder nach unten oder seitlich herausgeführt werden. Das Nest beinhaltet sämtliche Geometrien um den Materialzuschnitt, bzw. die Matte, flächig zu pressen, und Rippen/Kanäle und/oder befestigungsrelevante Aufbauten, wo das Spritzgussmaterial verteilt werden kann. Hierbei ist es nicht unbedingt erforderlich, über die bereits beschriebene Anbindung der Rippen zur Endkante, die Angusspunkte auf die Endkante zu legen.

Als Trenneinrichtung kann die erfindungsgemäße Vorrichtung bspw. auch Schnittbleche aufweisen. Dies ist besonders vorteilhaft bei der Herstellung von Innenverkleidungsteilen für den Automobilbau. So ist beispielweise die Außengeometrie bei Türverkleidungen in großen Teilen auf einer Ebene. Hier besteht die Möglichkeit, eine bearbeitbare Fläche vorzusehen, wo "2D-Schnittbleche" oder auch "3D-Schnittbleche" aufgeschraubt werden können. Diese Schnittbleche können zudem unterschiedliche Dicken aufweisen. Vorzugsweise würden die Schnittbleche derart fixiert, dass sie eine Verlängerung der Schnittkante darstellen. Bei einer Vergrößerung der Dicke schneidet somit das Werkzeug den Materialzuschnitt vorher ab. Durch den noch offenen Verformhub beim Abtrennen gleitet nichts mehr in das Werkzeug, sondern der Spalt für das Spritzgussmaterial wird größer.

Gemäß einer bevorzugten Ausführungsform der vorliegenden Erfindung sind die Unterform und/oder die Oberform, d.h. die jeweiligen Formnester, temperierbar. Vorzugsweise sind sowohl die Unterform als auch die Oberform temperierbar, wobei die beiden Formen auch unabhängig voneinander temperiert werden können. In einer besonders bevorzugten Ausführungsform erfolgt die separate Temperierung der Ober- und Unterform jeweils noch in mehrere Zonen unterteilt. Zusätzlich zu einer Temperierung der Formnester, wird auch noch eine Temperierung weiterer möglicher Bestandteile des Werkzeugs, wie beispielsweise eine Auswerferplatte und eine Heißkanalplatte, in Betracht gezogen.

Gemäß einer Weiterbildung der Erfindung ist ein Spannrahmen zum Positionieren des Materialzuschnitts vorgesehen. Zur Herstellung eines Formteils wird ein Materialzuschnitt in die offene Werkzeugkavität eingelegt, so dass der Materialzuschnitt auf der Unterform und dem Spannrahmen aufliegt. Wird die Vorrichtung - und damit die Werkzeugkavität - geschlossen, erfolgt ein Verformen des Materialzuschnitts durch die Oberform und Unterform sowie ein Abtrennen des Randabschnitts des Materialzuschnitts durch die Trenneinrichtung. Besonders vorteilhaft ist der Spannrahmen als kombinierter Spann- und Auswerferrahmen ausgestaltet. Dieser kombinierte Spann- und Auswerferrahmen dient beim Entformen des Fertigteils insbesondere als Auswerferrahmen für den Abfallbereich und/oder des Fertigteils.

### Kurze Beschreibung der Zeichnungen

Die Erfindung wird im Folgenden anhand von Ausführungsbeispielen unter Bezugnahme auf die angehängten Figuren näher erläutert.
Fig. 1 zeigt eine schematische Seitenquerschnittsansicht einer ersten Ausführungsform einer Vorrichtung zur Herstellung von Formteilen, wobei ein Werkzeug in einem geöffneten Zustand dargestellt ist.
Fig. 1a zeigt eine Detailansicht von Fig. 1.
Fig. 2 zeigt eine schematische Seitenquerschnittsansicht der Vorrichtung gemäß der ersten Ausführungsform, wobei das Werkzeug in einem nahezu geschlossenen Zustand dargestellt ist.
Fig. 2a zeigt eine Detailansicht von Fig. 2.
Fig. 3 zeigt eine schematische Seitenquerschnittsansicht der erfindungsgemäßen Vorrichtung gemäß der ersten Ausführungsform, wobei das Werkzeug in einem vollständig geschlossenen Zustand dargestellt ist.
Fig. 3a zeigt eine Detailansicht von Fig. 3.
Fig. 4 zeigt eine schematische Seitenquerschnittsansicht einer zweiten Ausführungsform einer Vorrichtung zur Herstellung von Formteilen, wobei ein Werkzeug in einem geöffneten Zustand dargestellt ist.
Fig. 4a zeigt eine Detailansicht von Fig. 4.
Fig. 5 zeigt eine schematische Seitenquerschnittsansicht der Vorrichtung gemäß der ersten Ausführungsform, wobei das Werkzeug in einem nahezu geschlossenen Zustand dargestellt ist.
Fig. 5a zeigt eine Detailansicht von Fig. 5.
Fig. 6 zeigt eine schematische Seitenquerschnittsansicht der Vorrichtung gemäß der ersten Ausführungsform, wobei das Werkzeug in einem vollständig geschlossenen Zustand dargestellt ist.
Fig. 6a zeigt eine Detailansicht von Fig. 6.
Fig. 7 zeigt eine Querschnittsansicht der Vorrichtung gemäß der ersten oder zweiten Ausführungsform mit Anguss- und Auswerfersystem
Fig. 8 zeigt eine Draufsicht auf eine Unterform der erfindungsgemäßen Vorrichtung zur Herstellung von Formteilen.

### Detaillierte Beschreibung der bevorzugten Ausführungsform

Bevorzugte Ausführungsformen der vorliegenden Erfindung werden nachfolgend unter Bezugnahme auf die angehängten Zeichnungen beschrieben. Einzelmerkmale der Ausführungsformen sowie Modifikationen können jeweils mit anderen Ausführungsformen kombiniert werden, um weitere Varianten der Erfindung auszubilden.

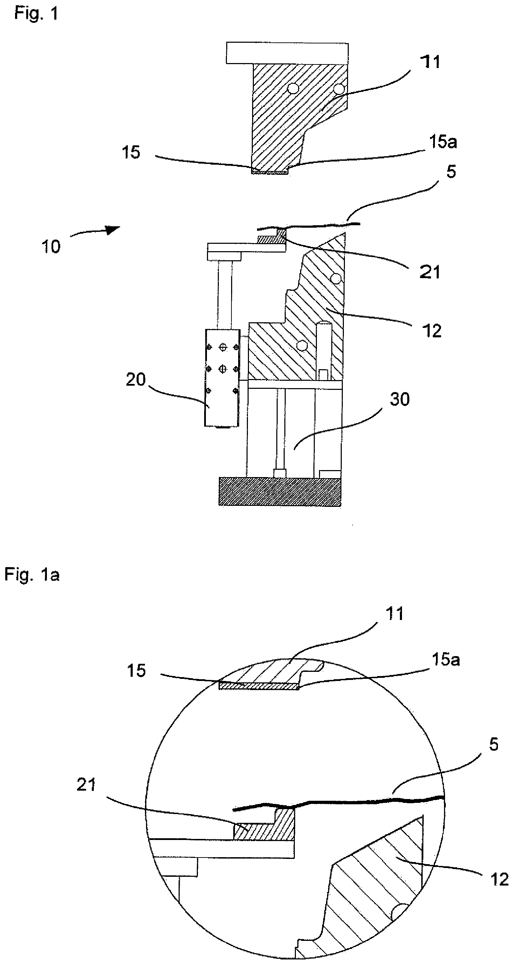

Fig. 1 zeigt eine schematische Seitenquerschnittsansicht der erfindungsgemäßen Vorrichtung 10 zur Herstellung von Formteilen. Die Vorrichtung 10 umfasst eine Unterform bzw. ein Unterwerkzeug 12 und eine Oberform bzw. ein Oberwerkzeug 11 zum Verformen eines Materialzuschnitts 5 aufweist.

Bei der in Fig. 1 gezeigten Vorrichtung 10 ist diese in einem geöffneten Zustand dargestellt. Vorzugsweise ist der Materialzuschnitt 5 ein Faserhalbzeug, wie beispielsweise eine vorkalibrierte NFPP-Matte. Bei der dargestellten Ausführungsform ist die Oberform 11 in Bezug auf die Unterform 12 verfahrbar. Die Vorrichtung 10 umfasst ferner ein Gestell bzw. einen Unterbau 30 sowie eine Positioniereinrichtung bzw. Verfahreinheit 20. An der Positioniereinrichtung 20 ist ein Spannrahmen 21 zum Positionieren des Materialzuschnitts 5 angeordnet, der als kombinierter Spann- und Auswerferrahmen 21 ausgestaltet ist.

Wie im Detail in Fig. 1a zu sehen ist, ist der Materialzuschnitt 5 in die Unterform 12 eingelegt und auf dem Spannrahmen 21 angeordnet. Weiterhin umfasst die Vorrichtung 10 eine an der Oberform 11 angeordnete Trenneinrichtung 15 zum Abtrennen eines Randbereichs des Materialzuschnitts 5.

Die Trenneinrichtung 15 ist als ein Schneidwerkzeug, wie beispielsweise ein Schneidring oder ein Schneidblech (hier dargestellt), ausgebildet, und weist eine Überfahrkante 15a auf. Da das Schneidblech 15 in der vorliegenden Ausführungsform abnehmbar am Oberwerkzeug befestigt ist, sind die Dicken des Schneidbleches variabel einstellbar, wobei der Zeitpunkt des Eingriffs des Schneidblechs 15 am zu schneidenden Bereich (hier: Randbereich) des Materialzuschnitts 5 von der Dicke des Schneidbleches 15 abhängt. Das heißt, bei einer größeren Dicke des Schneidbleches 15 schneidet das Schneidblech (Trenneinrichtung) 15 den Materialzuschnitt 5 zu einem früheren Zeitpunkt während des Schließvorgangs der Ober- und Unterform 11, 12 ab, als bei einer kleineren Dicke des Schneidbleches 15.

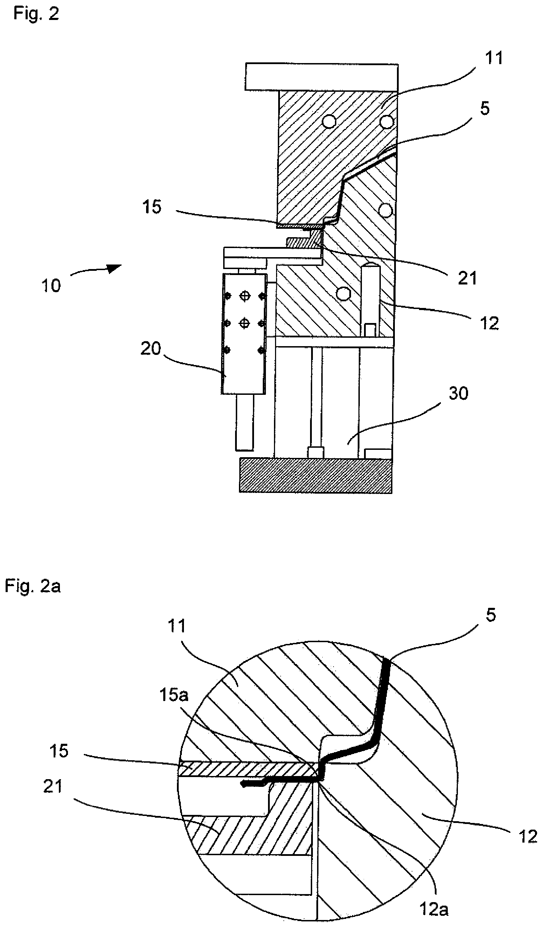

Nachdem der Materialzuschnitt 5 in die Unterform 12 eingelegt wurde, wird die Oberform 11 auf die Unterform 12 zubewegt, und damit die Kavität des Werkzeugs 10 teilweise geschlossen (siehe Fig. 2). Der Schließvorgang wird gemäß der vorliegenden Ausführungsform kontinuierlich durchgeführt, kann jedoch aus technischer Sicht auch schrittweise durchgeführt werden.

Während des Schließvorgangs wird der Materialzuschnitt 5 bereits teilweise verformt. Bevor die Kavität vollständig geschlossen ist, und damit auch die Verformung des Materialzuschnitts 5 abgeschlossen wäre, wird ein Randbereich des Materialzuschnitts 5 abgetrennt.

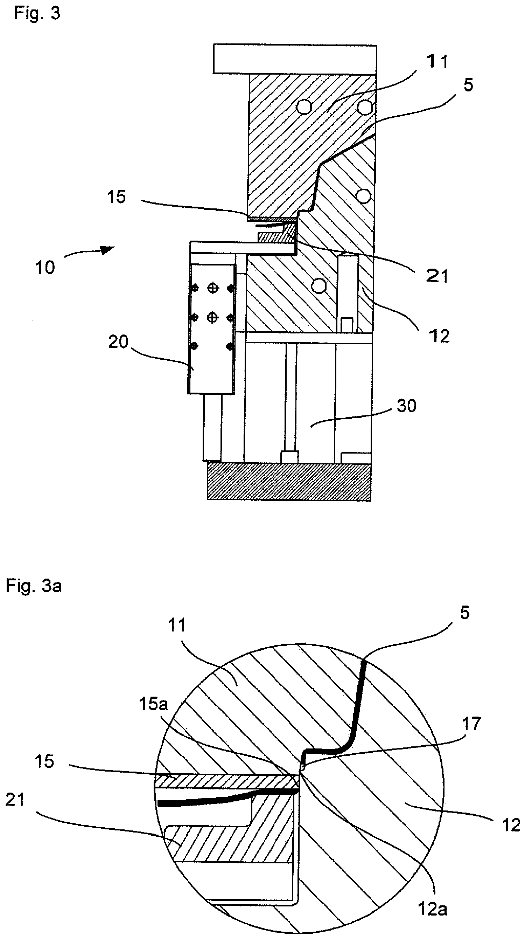

In Fig. 2a wird die Vorrichtung (Werkzeug) 10 in einem nahezu geschlossenen Zustand gezeigt. Hier ist deutlich zu erkennen, dass die Kavität der Vorrichtung 10 noch nicht vollständig geschlossen ist, d.h. die Oberform 11 noch nicht vollständig auf die Unterform 12 heruntergefahren wurde. Ebenfalls lässt sich der Fig. 2a entnehmen, dass der Materialzuschnitt 5 an einer Überfahrkante 15a abgetrennt wird, wenn die Vorrichtung 10 noch weiter geschlossen wird und die Überfahrkante 15a eine Beschnittkante 12a des Unterwerkzeugs 12 überfährt. Der Schnittvorgang ergibt sich aus einer Zusammenschau der Fig. 2/2a sowie der nachfolgenden Fig. 3/3a.

In Fig. 3 wird die Vorrichtung 10 in einem vollständig geschlossenen Zustand dargestellt. In diesem Zustand wurde ein zu schneidender Bereich des Materialzuschnitts 5 bereits abgetrennt. Wie insbesondere Fig. 3a zu entnehmen ist, hat sich der Materialzuschnitt 5 in Richtung Werkzeugmitte zurückgezogen. Durch den Materialrücksprung entsteht ein zusätzlicher Raum zwischen der Kante des Materialzuschnitts 5 und Unterform 12, so dass es möglich ist, in einer an der Unterform angeordneten Spritzgusskavität bzw. Spritzgussaussparung 17 den gesamten Randbereich des Materialzuschnitts 5 um die Schnittkante 5a herum zu umspritzen.

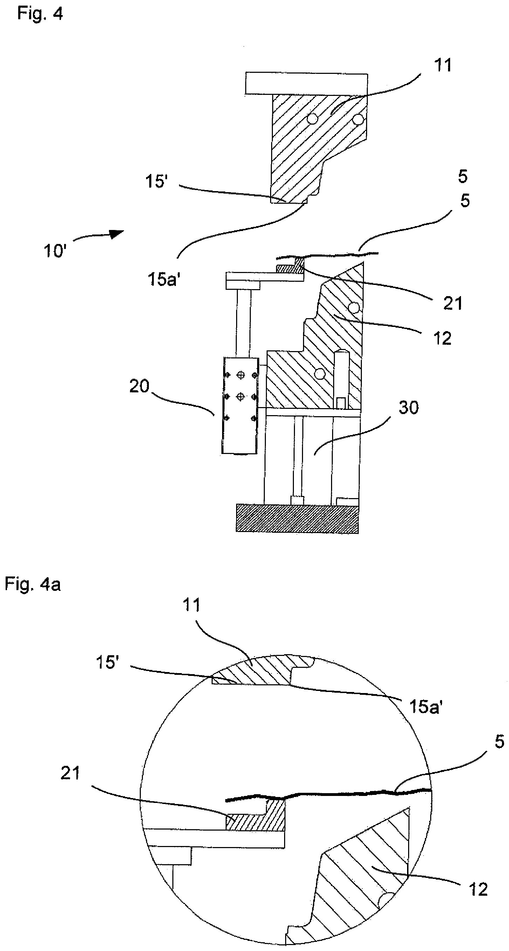

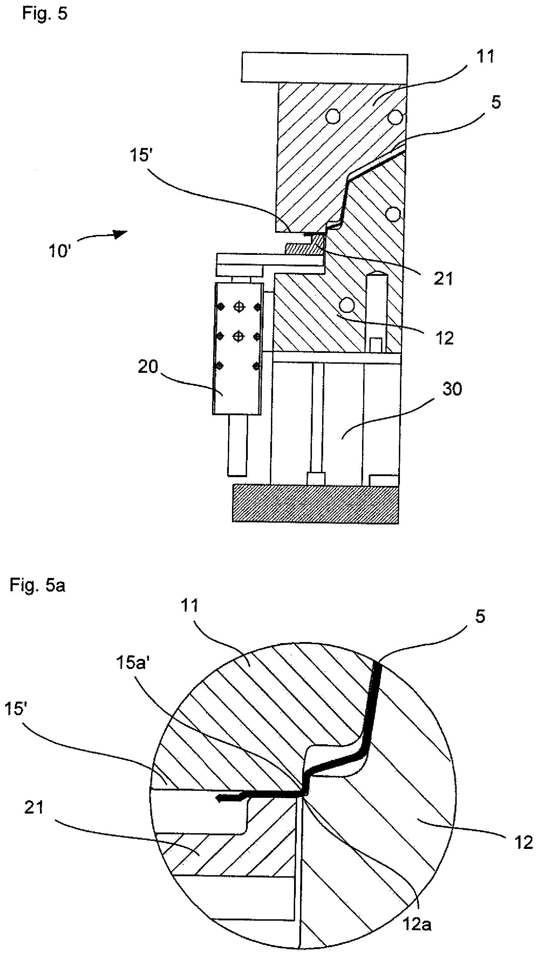

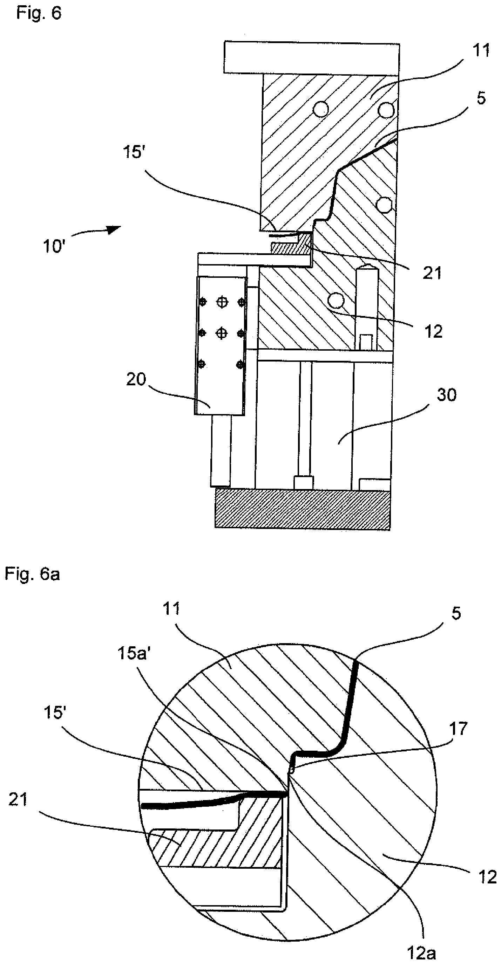

In den Figuren 4, 4a, 5, 5a, 6 sowie 6a wird eine zweite Ausführungsform der vorliegenden Erfindung dargestellt. Entsprechende bzw. ähnliche Bauteile wie in der ersten Ausführungsform werden durch die gleichen Bezugszeichen gekennzeichnet und zur genaueren Erläuterung dieser Bauteile wird auf die obigen Ausführungen verweisen.

Im Wesentlichen unterscheidet sich die zweite Ausführungsform von der ersten Ausführungsform darin, dass anstatt eines Schneidblechs 15 ein entsprechender Bereich der Oberform 11 als Trenneinrichtung 15' ausgebildet ist, sodass sich wie beim Schneidblech der ersten Ausführungsform eine Überfahrkante 15a' ausbildet. In diesem Fall verringerte sich der Montageaufwand bei der Herstellung der Vorrichtung, da die in der ersten Ausführungsform dargestellte separate Trenneinrichtung bereits in die Oberform 11 integriert ist. Der übrige Verfahrensablauf beim Einsatz der Vorrichtung 10' der zweiten Ausführungsform entspricht demjenigen der ersten Ausführungsform.

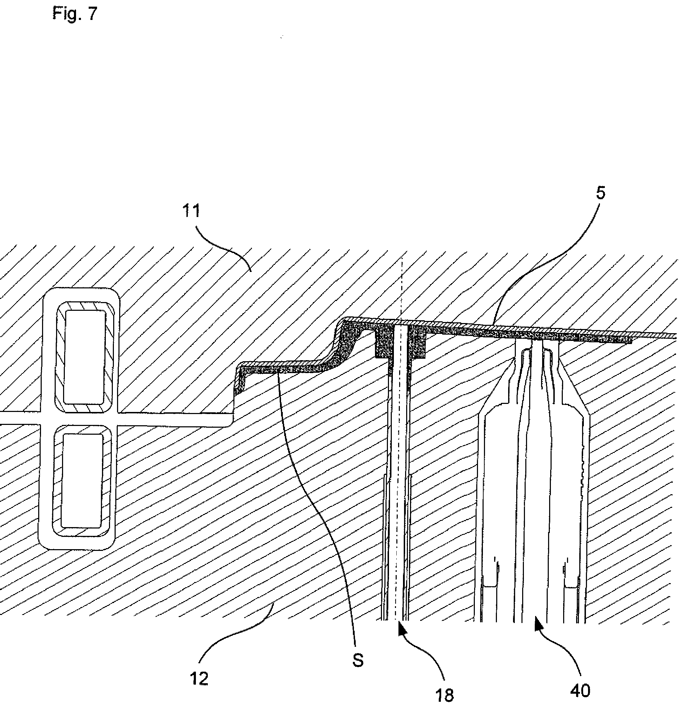

Fig. 7 ist eine Schnittansicht der Vorrichtung 10/10` gemäß der ersten oder zweiten Ausführungsform. Im dargestellten Zustand ist das Werkzeug geschlossen. Ferner wurde bereits ein Spritzgußmaterial S über einen Angusskanal 18 hinter den Materialzuschnitt 5 gespritzt. In einem nachfolgenden Verfahrensschritt wird das derart erstellte Bauteil mittels einer bzw. mehrerer Auswerferstifte 40 aus der Unterform 12 herausgedrückt, sodass dieses entnommen werden kann.

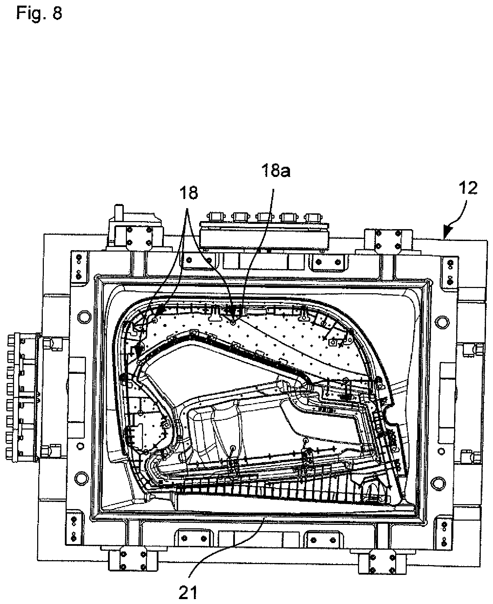

Schließlich zeigt Fig. 8 eine schematische Draufsicht auf die Unterform 12 der erfindungsgemäßen Vorrichtung 10 zur Herstellung von Formteilen. Wie Fig. 8 zu entnehmen ist, ist der Spannrahmen 21 an der Unterform 12 angeordnet. Die Größe des zu bearbeitenden Materialzuschnitts 5 entspricht vorzugsweise ungefähr der Größe des Spannrahmens 21.

In der Unterform 12 sind mehrere Angusskanäle 18 dargestellt, wobei lediglich einige dieser mit Bezugszeichen versehen sind. Mit den Angusskanälen 18 sind jeweils mehrere Angusskanalrippen 18a in Verbindung, die sich in Richtung der Beschnittkante 12a, die mit der Überfahrkante 15a, 15a` in Eingriff gelangt, erstrecken, wodurch das Spritzgussmaterial an die Spritzgusskavität 17 (siehe z.B. Fig. 3) zugeführt wird.

Zur Herstellung eines Formteils wird ein Materialzuschnitt 5 in die Unterform 12 eingelegt. Anschließend wird die Kavität der Vorrichtung 10 geschlossen und dadurch der Materialzuschnitt 5 bereits zum Teil verformt. Bevor die Kavität vollständig geschlossen ist, und damit auch die Verformung des Materialzuschnitts 5 abgeschlossen ist, wird durch die Trenneinrichtung 15, 15' ein (Rand-)Bereich des Materialzuschnitts 5 abgetrennt. Das Abtrennen des (Rand-)Bereiches des Materialzuschnitts 5 wird, in Abhängigkeit von dem zu erzielenden Materialrücksprung des Materialzuschnitts 5, vor dem vollständigen Schließen der Kavität der Vorrichtung 10 ausgeführt.

Da sich der Materialzuschnitt 5 aufgrund der Verformung des (Rand-)Bereiches in Richtung Werkzeugmitte zurückzieht, entsteht ein umlaufender Spalt zwischen der Beschnittkante 12a und einem Nestende der Unterform 12. Anschließend wird der Bereich des abgeschnittenen Bereichs des Materialzuschnitts 5a in der Spritzgusskavität 17 mit einem Spritzgussmaterial umspritzt.

### Bezugszeichenliste

- 10, 10': Vorrichtung zur Herstellung von Formteilen (Werkzeug)
- 5: Materialzuschnitt
- 11: Oberform
- 12: Unterform
- 12a: Beschnittkante
- 15, 15`: Trenneinrichtung
- 15a, 15a`: Überfahrkante
- 17: Spritzgusskavität
- 18: Angusskanal für Spritzguss
- 18a: Angusskanalrippen
- 20: Positioniereinrichtung
- 21: Spann- und Auswerfereinrichtung
- 30: Gestell
- 40: Auswerferstift

## Patentansprüche

1. Verfahren zur Herstellung von Formteilen, insbesondere Verkleidungsteilen für einen Fahrzeuginnenraum, folgende Schritte umfassend:
Einlegen und Positionieren eines Materialzuschnitts (5) in eine geöffnete Kavität einer Vorrichtung (10, 10') mit einer Unterform (12) und einer Oberform (11), von denen zumindest eine in Bezug auf die andere verfahrbar ist, wobei der Materialzuschnitt (5) ein Faserhalbzeug, das aus einem Faserverbundwerkstoff, insbesondere einem Faser-Kunststoff-Verbund, gebildet ist, umfasst,
Schließen der Kavität und Verformen des Materialzuschnitts (5) durch ein relativ auf einander zu Bewegen von Unterform (12) und Oberform (11);
Abtrennen eines Bereiches des Materialzuschnitts (5) während des Schließens der Kavität;
gefolgt durch ein weiteres Verformen des Materialzuschnitts (5) durch ein auf einander zu Bewegen von Unterform und Oberform und Vervollständigen des Schließens der Kavität; und
Anspritzen eines Bereichs benachbart zum geschnittenen Bereich des Materialzuschnitts (5) mittels Spritzguss.

2. Verfahren nach Anspruch 1, wobei das Abtrennen des Materialzuschnitts (5) in Abhängigkeit von einem zu erzielenden Materialrücksprung des Materialzuschnitts (5) vor dem vollständigen Schließen der Kavität ausgeführt wird.

3. Verfahren nach Anspruch 1 oder 2, wobei das Abtrennen des Bereiches des Materialzuschnitts (5) und das vollständige Schließen der Kavität der Vorrichtung in einem Hub ausgeführt werden.

4. Verfahren nach Anspruch 1, wobei das Faserhalbzeug aus einem Naturfaser-/Polypropylen-Gemisch gebildet ist.

5. Verfahren nach einem der Ansprüche 1 bis 4, wobei die Schnittkante sowie die rückseitigen Rippen, Dome und Retainer gespritzt werden.

6. System umfassend eine Vorrichtung (10, 10') zum Herstellen von Formteilen, insbesondere Verkleidungsteilen für einen Fahrzeuginnenraum, sowie einen Materialzuschnitt (5),
wobei die Vorrichtung umfasst:
eine Unterform (12) und eine Oberform (11) zum Verformen eines Materialzuschnitts (5), von denen zumindest eine in Bezug auf die andere verfahrbar ist;
eine vorzugsweise an der Oberform (11) angeordnete Trenneinrichtung (15, 15') zum Abtrennen des Materialzuschnitts (5); und
wobei die Trenneinrichtung (15, 15') derart ausgebildet ist, dass nach Schließen der Oberform (11) und der Unterform (12) ein weiteres Verformen des Materialzuschnitts (5) durch ein auf einander zu Bewegen von Unterform und Oberform und Vervollständigen des Schließens der Kavität erfolgt, wodurch eine Spritzgusskavität (17) zwischen der Oberform (11) und der Unterform (12) und dem Materialzuschnitt (5) ausgebildet wird, und
wobei der Materialzuschnitt (5) ein Faserhalbzeug, das aus einem Faserverbundwerkstoff, insbesondere einem Faser-Kunststoff-Verbund, gebildet ist, umfasst.

7. System nach Anspruch 6, wobei die Unterform und/oder die Oberform temperierbar sind.

8. System nach einem der Ansprüche 6 oder 7, ferner umfassend einen Spannrahmen (21) zum Positionieren des Materialzuschnitts (5).

9. System nach Anspruch 8, wobei der Spannrahmen (21) als kombinierter Spann- und Auswerferrahmen ausgestaltet ist.

10. System nach einem der Ansprüche 6 bis 9, wobei die Trenneinrichtung (15, 15') zum Abtrennen des Materialzuschnitts (5) ein Schneidblech umfasst oder an der Oberform (11) integral ausgebildet ist.

## Claims

1. Method for the manufacture of moulded parts, in particular trim parts for a vehicle interior, comprising the following steps:
Inserting and positioning a material blank (5) in an opened cavity of an apparatus (10, 10') having a lower mould (12) and an upper mould (11), at least one of which is moveable in relation to the other, wherein the material blank (5) comprises a semi-finished fibre product formed from a fibre-reinforced composite material, in particular a fibre-plastic composite,
closing the cavity and deforming the material blank (5) by moving the lower mould (12) and upper mould (11) together relative to each other;
trimming off an area of the material blank (5) during the closing of the cavity;
followed by a further deformation of the material blank (5) by moving the lower mould and upper mould towards each other and completing the closing of the cavity; and
moulding an area adjacent to the cut area of the material blank (5) by means of injection moulding.

2. Method according to claim 1, wherein the trimming of the material blank (5) is carried out before the cavity is completely closed, depending on a material recess of the material blank (5) which is to be achieved.

3. Method according to claim 1 or 2, wherein the trimming of the area of the material blank (5) and the complete closure of the cavity of the apparatus are carried out in one stroke.

4. Method according to claim 1, wherein the semi-finished fibre product is formed from a natural fibre/ polypropylene mixture.

5. Method according to one of the claims 1 to 4, wherein the cut edge as well as the rear ribs, dome and retainer are injection moulded.

6. System comprising an apparatus (10, 10') for manufacturing moulded parts, in particular trim parts for a vehicle interior, as well as a material blank (5),
wherein the apparatus comprises:
a lower mould (12) and an upper mould (11) for moulding a material blank (5), at least one of which is moveable in relation to the other;
a trimming device (15, 15'), preferably arranged on the upper mould (11), for trimming the material blank (5); and
wherein the trimming device (15, 15') is designed in such a way that, after closing the upper mould (11) and the lower mould (12), a further deformation of the material blank (5) takes place by moving the lower mould and upper mould towards each other and completing the closing of the cavity, as a result of which an injection moulding cavity (17) is formed between the upper mould (11) and the lower mould (12) and the material blank (5), and
wherein the material blank (5) comprises a semi-finished fibre product formed from a fibre-reinforced composite material, in particular a fibre-plastic composite.

7. System according to claim 6, wherein the lower mould and/or the upper mould are temperature-adjustable.

8. System according to one of the claims 6 or 7, further comprising a clamping frame (21) for positioning the material blank (5).

9. System according to claim 8, wherein the clamping frame (21) is designed as a combined clamping and ejector frame.

10. System according to one of the claims 6 to 9, wherein the trimming device (15, 15') for trimming the material blank (5) comprises a cutting plate or is integrally formed on the upper mould (11).

## Revendications

1. Procédé de fabrication de pièces moulées, en particulier de pièces de revêtement pour un habitacle de véhicule, comprenant les étapes suivantes :
insertion et positionnement d'une découpe de matériau (5) dans une cavité ouverte d'un dispositif (10, 10') comportant un moule inférieur (12) et un moule supérieur (11), parmi lesquels au moins l'un peut être déplacé par rapport à l'autre, dans lequel la découpe de matériau (5) comprend un semi-produit en fibres, qui est formé à partir d'un matériau composite en fibres, en particulier d'un composite fibre-plastique,
fermeture de la cavité et façonnage de la découpe de matériau (5) par l'intermédiaire d'un mouvement l'un par rapport à l'autre du moule inférieur (12) et du moule supérieur (11) ;
séparation d'une zone de la découpe de matériau (5) pendant la fermeture de la cavité ;
suivie par un façonnage supplémentaire de la découpe de matériau (5) par l'intermédiaire d'un mouvement l'un par rapport à l'autre du moule inférieur et du moule supérieur et achèvement de la fermeture de la cavité ; et
injection d'une zone voisine de la zone découpée de la découpe de matériau (5) au moyen de moulage par injection.

2. Procédé selon la revendication 1, dans lequel la séparation de la découpe de matériau (5) est réalisée en fonction d'un retrait de matériau à obtenir de la découpe de matériau (5) avant la fermeture complète de la cavité.

3. Procédé selon la revendication 1 ou la revendication 2, dans lequel la séparation de la zone de la découpe de matériau (5) et la fermeture complète de la cavité du dispositif sont effectuées en une seule course.

4. Procédé selon la revendication 1, dans lequel le semi-produit en fibres est formé à partir d'un mélange de fibres naturelles/polypropylène.

5. Procédé selon l'une quelconque des revendications 1 à 4, dans lequel l'arête de coupe ainsi que les arêtes, dômes et éléments de retenue situés à l'arrière sont injectés.

6. Système comprenant un dispositif (10, 10') pour la fabrication de pièces moulées, en particulier de pièces de revêtement pour un habitacle de véhicule, ainsi qu'une découpe de matériau (5),
dans lequel le dispositif comprend :
un moule inférieur (12) et un moule supérieur (11) pour le façonnage d'une découpe de matériau (5), parmi lesquels au moins l'un peut être déplacé par rapport à l'autre ;
un dispositif de séparation (15, 15') agencé de préférence sur le moule supérieur (11) pour la séparation de la découpe de matériau (5) ; et
dans lequel le dispositif de séparation (15, 15') est formé de sorte que, après la fermeture du moule supérieur (11) et du moule inférieur (12) un façonnage supplémentaire de la découpe de matériau (5) est effectuée par un mouvement l'un par rapport à l'autre du moule inférieur et du moule supérieur ainsi qu'un achèvement de la fermeture de la cavité, moyennant quoi une cavité de moulage par injection (17) est formée entre le moule supérieur (11) et le moule inférieur (12) et la découpe de matériau (5) et
dans lequel la découpe de matériau (5) comprend un semi-produit en fibres, qui est constitué d'un matériau composite en fibres, en particulier d'un composite fibre-plastique.

7. Système selon la revendication 6, dans lequel le moule inférieur et/ou le moule supérieur peuvent être tempérés.

8. Système selon l'une des revendications 6 ou 7, comprenant en outre un cadre de serrage (21) pour le positionnement de la découpe de matériau (5).

9. Système selon la revendication 8, dans lequel le cadre de serrage (21) est conçu comme un cadre de serrage et d'éjection combiné.

10. Système selon l'une quelconque des revendications 6 à 9, dans lequel le dispositif de séparation (15, 15') pour la séparation de la découpe de matériau (5) comprend une plaque de coupe ou est formé d'un seul tenant sur le moule supérieur (11).
